# EUROPEAN PATENT APPLICATION

(11) **EP 3 815 939 A1**
(43) Date of publication of application: **05.05.2021**
(21) Application number: 20204924.3
(22) Date of filing: 30.10.2020
(51) Int. Cl.: B60D 1/60

(54) **ANTI-THEFT DEVICE**

(30) Priority: 01.11.2019 GB 201915904
(71) Applicant: Maypole Limited, Woodgate Business Park Birmingham B32 3DE (GB)
(72) Inventor: Jones, Christopher, Birmingham, B32 3DE (GB); Sworder, Malcolm, Birmingham, B32 3DE (GB)
(74) Representative: Gee, Steven William

(57) **Abstract**

This invention relates to an anti-theft device, and in particular to a hitch lock for reducing the likelihood of theft of a towed vehicle such as a trailer or caravan. The anti-theft device (10) comprises a one-piece housing (12) and a locking bolt (14), the one-piece housing being of generally cuboid form with a top wall (16), a bottom wall (18), a front wall (20), a back wall (22) and two side walls (24). The walls are rigidly interconnected, and each of the side walls has a hole for the locking bolt. The back wall (22) has an opening (42) of a size and shape to accommodate several different designs of hitch mechanism. The front wall may also have an opening (46) to accommodate a part of the hitch mechanism.

## Description

### FIELD OF THE INVENTION

This invention relates to an anti-theft device, and in particular to a hitch lock for reducing the likelihood of theft of a towed vehicle such as a trailer or caravan.

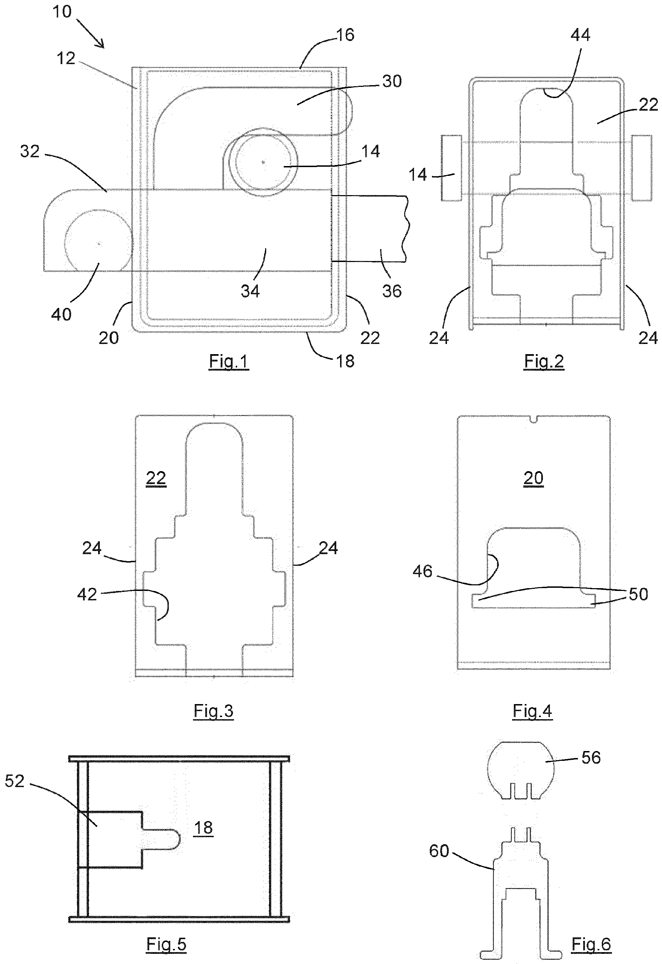

In this specification, terms of direction and orientation such as "top", "bottom" etc. refer to the anti-theft device in its normal orientation of use as shown in Fig.1, unless it is stated otherwise.

### BACKGROUND TO THE INVENTION

Many types of towed vehicle are known, for many different purposes and applications. However, there has become a significant degree of standardisation in the means of coupling the towed vehicle to the towing vehicle, enabling a single towing vehicle to be coupled to many different towed vehicles, and vice versa.

However, this standardisation also means that an unauthorised person can relatively easily tow away a towed vehicle, provided that the unauthorised person has a towing vehicle with a standard coupling.

The standard coupling is based upon a ball and socket connection, the towing vehicle being fitted with a towing "ball" of known dimensions, and the towed vehicle being fitted with a hitch mechanism including a socket which can accommodate the towing ball. The hitch mechanism includes an operating handle which is movable between a securing positing in which the towing ball can be held in the socket and a releasing position in which the towing ball can be inserted into and released from the socket.

### DESCRIPTION OF THE PRIOR ART

When seeking to prevent the theft of a towed vehicle it is known to block access to the socket so that the towing ball of an unauthorised towing vehicle may not be inserted thereinto. Some of the known anti-theft devices seek to prevent access to the socket directly by providing a false "ball" which can be inserted into the socket. The false ball is secured in the socket to prevent the insertion of the towing ball of an unauthorised towing vehicle. Anti-theft devices which operate in this way are disclosed in GB 2 172 255, GB 2 236 513 and US 5 775 139.

Other known anti-theft devices seek to prevent access to the socket indirectly by providing a housing which can overlie at least a part of the socket and thereby prevent the insertion of the towing ball of an unauthorised towing vehicle. Anti-theft devices which operate in this way are disclosed in GB 2 055 140, GB 2 221 881, GB 2 257 100, EP 0 446 498 and US 5 421 601.

In addition, the anti-theft device of GB 2 257 100 can be fitted to a hitch mechanism which is mounted to the towing ball of a towing vehicle so that it can also be used to seek to prevent the unauthorised uncoupling of the hitch mechanism from an (authorised) towing vehicle. This anti-theft device can therefore be used to seek to prevent the theft of a towed vehicle whether that vehicle is already hitched to another towing vehicle, or is unhitched.

GB 2 172 255 and EP 0 446 498 both employ exposed padlocks to secure the respective devices to the hitch mechanism. Whilst padlocks are in widespread use they are not believed to be sufficiently secure to deter a determined thief. Thus, padlocks can be forced open by a suitable lever, or the hasp can be cut by a hacksaw for example. Once the padlock has been removed, the devices of these documents are rendered ineffective. Greater security is provided by a dedicated locking bolt or bar such as that used in GB 2 221 881 and in many of the other anti-theft devices.

For many towed vehicles the hitch mechanism is manufactured separately to the remainder of the towed vehicle (and often by a different manufacturer). The hitch mechanism typically has a sleeve which can be mounted to the towing arm of the towed vehicle by securing bolts which pass through the sleeve and the towing arm. In the known anti-theft devices having a housing, the housing typically also covers and encloses at least one of the securing bolts. An intending thief therefore cannot simply remove the securing bolts and thereby remove the hitch mechanism (and fitted anti-theft device) in order to mount a replacement (unsecured) hitch mechanism.

GB 2 055 140, GB 2 236 513, GB 2 257 100, US 5 421 601 and US 5 775 139 all disclose a pair of components which together form a two-piece housing to enclose at least part of the socket and/or the hitch mechanism. In the latter two documents the pair of components are hinged together. The pair of components are typically secured together as a housing by a locking element having a key-controlled peg or cam. In each case it is possible for an intending intruder to apply force (by way of a suitable lever) seeking to separate the pair of components, which force is transmitted directly to the peg or cam; with sufficient force the peg or cam can be broken or deformed sufficiently to disable the locking element and permit the unauthorised separation and release of the pair of components.

EP 1 125 773 also discloses an anti-theft device having a pair of components which together form a housing and which are secured together by a locking element. This device avoids the above-mentioned problem by fitting the two components together in a first direction and inserting the locking element in a second (perpendicular) direction. Attempts to forcibly separate the two components (in a direction opposite to the first direction) is resisted by the body of the locking element rather than the significantly smaller peg or cam of the locking element.

Other of the known anti-theft devices operate by seeking to prevent movement of the operating handle to its releasing position - holding the operating handle in its securing position prevents the towing ball of an unauthorised vehicle being inserted into the socket. Anti-theft devices which operate in this way are disclosed in GB 2 218 678, EP 0 446 498 and German utility model 93 19 824.8. The aforementioned documents GB 2 221 881 and GB 2 236 513 also share this feature.

GB 2 210 343 discloses an anti-theft device having a housing to overlie at least a part of the socket, the housing incorporating a protrusion which can locate in the socket. To fit this anti-theft device the housing is slid over the hitch mechanism and manipulated until the protrusion enters the socket. A locking bolt is used to bridge across a housing, the locking bolt lying close to the top of the hitch mechanism and preventing manipulation of the housing to release the protrusion from the socket. A key-operated locking means is provided to secure the bolt to the housing. This device has a one-piece housing so that the intending thief cannot seek to disable the anti-theft device by forcing apart respective parts of the housing as in the devices utilising a two-piece housing as described above.

One disadvantage of the arrangement of GB 2 210 343, however, is that it is necessary to manipulate the housing to insert the protrusion into the socket whilst the protrusion and socket are obscured from view. Another disadvantage is that it is necessary to manipulate the locking bolt so that it can correctly bridge across the housing, the locking bolt passing close to parts of the hitch mechanism. Since the protrusion is relatively small it is necessary that the housing has only very limited movement when the locking bolt is in place (so that the housing cannot be manipulated to release the protrusion without first removing the locking bolt). The locking bolt must therefore be a relatively tight fit between the housing and the hitch mechanism and this makes the manipulation and insertion of the locking bolt difficult to achieve in practice. Also, since the locking bolt when correctly inserted should project as little as possible from the housing (since any projecting part provides a means for an intending thief to seek to disable the device), manipulation before the bolt is correctly inserted is made more difficult.

GB 2 221 881 also discloses a one-piece housing which is secured by a locking bolt. This device does not have a protrusion which fits into the socket but the locking bolt necessarily passes close to parts of the hitch mechanism (and in particular to the operating handle) as it bridges across the housing. Again, the locking bolt must be a relatively tight fit between the housing and the hitch mechanism and this makes the manipulation and insertion of the locking bolt difficult to achieve in practice. Also, it is again arranged that the locking bolt when correctly inserted should project as little as possible from the housing with the result that manipulation of the locking bolt before it is correctly inserted is made more difficult.

The housing of GB 2 221 881 does not cover or enclose the securing bolts for the hitch mechanism. An intending thief can therefore remove the whole of the hitch mechanism (and the fitted housing) and replace it with an unsecured hitch mechanism to permit theft of the towed vehicle.

Most of the "towing ball and socket" hitch mechanisms share the common features set out above, namely a socket, an operating handle and a sleeve for mounting to a towing arm. However, there are several different manufacturers of such mechanisms, including for example Knott Gmbh (of Gutenbergsrasse 21, 93128 Regenstauf, Germany), Winterhoff (Alois Kober GmbH, of Ichenhauser Str. 14, 89359 Kölz, Germany) and Steelpress Limited (of 5 Kargowska St. PL-60-543 Poznan, Poland). The detailed design of the hitch mechanisms vary between the different manufacturers, and the manufacturers also make different designs and sizes of hitch mechanism. Attempts to make an anti-theft device more secure typically result in it being limited to use for only one (or at most a small number) of the known designs. Thus, to increase the level of security it is generally desired to limit the movement of a fitted anti-theft device relative to the hitch mechanism, and also to limit the degree of access between the hitch mechanism and the fitted anti-theft device, so that the intending thief has less scope to insert a lever or to otherwise manipulate the anti-theft device to a position in which it can be forcibly removed. Reducing the relative movement and freedom of access usually results in an anti-theft device being fully suited to only a very small number of the different designs and being less secure (or being unusable) for other designs.

The anti-theft devices of GB 2 210 343 and GB 2 221 811 are each suited to a specific design of hitch mechanism. In GB 2 210 343 it is critical that the locking bar passes close to the upper wall of the socket so that the housing cannot be manipulated sufficiently to release the protrusion from the socket (see in particular Fig.2). In GB 2 221 811 it is critical that the locking bar passes through the operating handle very close to the end of the operating handle. The housing of GB 2 221 811 includes an internal guide within which the operating handle is a relatively tight fit and which ensures the correct alignment of the housing upon the hitch mechanism. Neither of these devices will be secure when fitted to a different design of hitch mechanism which does not very closely replicate the relevant features of the identified hitch mechanisms.

It is an object of the present invention to provide an anti-theft device which seeks to reduce or avoid the disadvantages and drawbacks of the known devices. It is another object to provide an anti-theft device having a one-piece housing which is secured by a locking bolt so that the device shares the benefits of those earlier anti-theft devices having these features. It is another object to provide an anti-theft device which can be used with many different designs of hitch mechanism (for example many of the different designs of hitch mechanisms which are manufactured from pressed steel by Knott, Winterhoff and Steelpress) and which will provide the desired level of security for each of those hitch mechanisms.

### SUMMARY OF THE INVENTION

According to a first aspect of the invention there is provided an anti-theft device for fitment to a hitch mechanism of a towed vehicle, the device comprising a one-piece housing and a locking bolt, the one-piece housing being of generally cuboid form with a top wall, a bottom wall, a front wall, a back wall and two side walls, the walls being rigidly interconnected, each of the side walls having a hole to accommodate the locking bolt, the back wall having an opening to accommodate the hitch mechanism during fitment.

Accordingly, the back wall faces towards or overlies a part of the towing arm in the fitted condition (and the opposing front wall lies adjacent to the socket). As the device is fitted to the hitch mechanism the housing (and in particular the back wall) is passed over and along the hitch mechanism from the socket end to the towing arm end. The opening in the back wall must be large enough to accommodate those parts of the hitch mechanism which it passes during fitment.

The anti-theft devices of GB 2 210 343 and GB 2 221 811 have no back wall and there is little or no impediment to an intending thief inserting a lever into the large gap between the housing and the hitch mechanism from the direction of the towing arm. Notwithstanding that the present invention has an opening in the back wall the gap between the fitted housing and the hitch mechanism through which a lever might be inserted is significantly reduced.

Preferably, the opening in the back wall is of a size and shape to match a particular design of hitch mechanism. Desirably the opening is of a size and shape to match more than one particular design of hitch mechanism (and ideally to match multiple designs of hitch mechanism). In this respect it will be understood that whilst different designs of hitch mechanism differ in detail and in certain of their dimensions, many of the different designs are generally similar because they are all designed to accommodate a similarly-sized towing ball and they are all designed to fit to a known range of towing arms having similar dimensions. Since it is necessary for the housing, and in particularly for the back wall, to pass over and along the hitch mechanism, it is necessary that the opening is large enough to accommodate the largest cross-section of the particular hitch mechanism. Making the opening suitable to accommodate the largest cross-section of the largest of multiple hitch mechanisms will result in a housing which can be fitted to many smaller hitch mechanisms.

Desirably the housing is designed to accommodate the operating handle in its securing position. Preferably the opening in the back wall is of a size and shape to accommodate the operating handle in its securing position. Preferably also the top edge of the opening in the back wall lies close to the top wall. Accordingly, as the housing is fitted to the hitch mechanism the operating handle passes through the opening in the back wall. The top wall can be continuous and it is not necessary for there to be any opening in the top wall to accommodate the operating handle. The operating handle can thereby be held in its securing position within the fitted housing - access to the operating handle is prevented by the top wall and movement of the operating handle to the releasing position is prevented by engagement with the top wall.

In particular embodiments the bottom wall has an opening to accommodate a part of the hitch mechanism or a part of the towing arm of the towed vehicle. Preferably the opening in the bottom wall is a continuation of the opening in the back wall.

Preferably the housing is made as a fabrication having six substantially flat walls, the walls being of metal and being secured together (as by welding). The six walls may initially be separate and all secured together by welding. Preferably, however, at least some of the walls are integrally formed (i.e. made from a single piece which is bent to form two or more walls), which will avoid the requirement to weld or otherwise secure the walls along every edge. For example, two of the walls may be formed as an integrated L-shape (for example allowing the housing to be fabricated by welding together three L-shaped pieces). Alternatively, three of the walls may be integrally formed as a first U-shape and the other three of the walls may be integrally formed as a second U-shape, the first and second U-shapes being secured together to create the six-sided housing. Alternatively, the housing may be fabricated from pieces comprising different numbers of walls, for example a U-shaped piece comprising three walls, an L-shaped piece comprising two walls and a flat piece comprising a single wall.

Desirably the walls are each between around 3 mm and around 5 mm thick and of steel which is recognised to be particularly difficult to cut through or distort even for a very determined thief. It is not necessary that all of the walls be the same thickness, and in some embodiments the walls with the largest openings are made thicker to compensate for the removed material. Thus, in embodiments made from first and second U-shaped components, the first U-shape component can be of a first thickness (for example 3 mm) and can form the top wall and the two side walls; the second U-shape component can be of a second thickness (for example 5 mm) and can form the front, back and bottom walls.

It has been found that shaping the opening in the back wall to accommodate multiple hitch mechanisms can result in a fitted anti-theft device with only a minimal gap between the fitted device and the housing into which an intending thief can insert a lever or other disabling tool (even if the hitch mechanism is the smallest of those with which the device is designed to be used). It has also been found that the housing can be made sufficiently robust to withstand significant forces which an intending thief might seek to apply. The presence of a back wall (notwithstanding the opening) not only limits the access for a lever or other disabling tool as described above, but also interconnects and provides structural support for the top wall, bottom wall and side walls to reduce the likelihood of those walls being damaged or distorted by an intending thief.

Preferably the front wall has an opening to accommodate the socket end of the hitch mechanism. Desirably the opening in the front wall is of a size and shape to accommodate the socket end of at least one and preferably multiple designs of hitch mechanism. It is recognised that an opening in any of the walls will provide a potential opportunity for the insertion of a lever or other disabling tool, especially when the anti-theft device is used for the smallest hitch mechanism. Nevertheless, the provision of an opening in the front wall is desirable as it allows a reduction in the overall length of the housing and therefore in the weight of the housing. This permits the use of thicker metal for the walls of the housing without exceeding an acceptable maximum weight.

It will be understood that the opening in the front wall is usually significantly smaller than the opening in the back wall as it is necessary that the front wall cannot pass over the operating handle (and other parts of the hitch mechanism).

Preferably the bottom wall does not overlie the socket in the fitted condition. In such embodiments the socket passes the back wall and then the front wall during fitment of the device. Whilst the socket is therefore accessible when the anti-theft device is fitted, it is not possible to fit the towing ball of an unauthorised vehicle because the operating handle is held in its securing position. In such embodiments it is not necessary to provide an opening in the bottom wall to accommodate a towing ball (or a false towing ball) and the bottom wall can provide the maximum support to the front wall and to the side walls.

Alternatively, the anti-theft device includes a false ball adapted to locate in the socket and to be secured in the socket. As with the prior art documents described above, securely locating a false ball in the socket provides additional security against a thief who is intent on inserting the towing ball of an unauthorised vehicle. Also as with the prior art documents described above, the false ball is secured in the socket by holding the operating handle in its securing position. In order to remove the false ball and permit access to the socket it is necessary to move the operating handle to its releasing position and this cannot be achieved whilst the anti-theft device is in place, whether or not the anti-theft device also covers and/or obscures some or all of the socket and/or false ball.

Desirably the false ball does not extend beyond the bottom of the hitch mechanism, and ideally does not extend beyond the bottom of the socket. It is therefore not necessary for the opening in the back wall, or the opening in the front wall, to be extended to accommodate any part of the false ball.

Preferably there is provided a supporting column upon which the false ball can be supported during insertion into the socket. It is recognised that in many designs of hitch mechanism the operating handle is resiliently biased to the securing position but is temporarily securable in its releasing position (typically by a cam or the like). The securing element which engages and secures the towing ball can thereby be temporarily held in its releasing position as a first step in coupling the towed vehicle to the towing vehicle. When the towing ball is subsequently inserted into the socket it releases the cam and allows the operating handle and securing element to move to their securing positions. The nose weight of the towed vehicle may be sufficient to release the cam or the user may need to apply downwards pressure upon the hitch mechanism to release the cam. The supporting column holds the false ball above the ground to somewhat replicate the towing ball of a towing vehicle; the user secures the false ball in the socket by lowering the socket onto the supported false ball in a similar fashion to lowering the socket onto the towing ball of a towing vehicle. The column is subsequently removed so that it does not impair the fitment of the anti-theft device to the hitch mechanism.

Reference is made to the housing being generally cuboid, i.e. having substantially parallel side walls, substantially parallel top and bottom walls, and substantially parallel front and back walls. This provides the simplest structure with all of the walls being planar and having a substantially rectangular outline. It will, however, be understood that particular pairs of opposing walls may converge rather than be parallel without detriment to the invention. Also, at least some of the walls may be non-planar without detriment to the invention. Also again, at least some of the edges and/or corners where walls meet can be rounded.

According to a second aspect of the invention there is provided an anti-theft device for fitment to a hitch mechanism of a towed vehicle, the device comprising a one-piece housing and a locking bolt, the one-piece housing having at least a front wall, a back wall and two side walls, the walls being rigidly interconnected, the side walls each having a hole to accommodate the locking bolt, the back wall having an opening to accommodate the hitch mechanism during fitment, and the front wall having an opening to accommodate the socket end of the hitch mechanism.

As above stated, it is recognised that an opening in any of the walls will provide a potential opportunity for the insertion of a lever or other disabling tool, especially when the anti-theft device is used for the hitch mechanism with the smallest cross-section. Nevertheless, the provision of an opening in the front wall is desirable in this aspect of the invention. The opening in the front wall is aligned with the opening in the back wall and both openings are of a size and shape to accommodate the hitch mechanism. The respective openings in the front and back walls can therefore together act to align the housing upon the hitch mechanism and to ensure the appropriate location of the locking bolt relative to the hitch mechanism.

In particular, the openings in the front wall and the back wall serve to align respective parts of the hitch mechanism at two spaced-apart locations with the locking bolt in between those spaced-apart locations. The likelihood of misalignment of the housing (which might make the correct insertion of the locking bolt more difficult) is therefore much reduced or avoided, even for the hitch mechanism having the smallest cross-section.

Preferably the opening in the front wall has extensions to accommodate projecting parts of the hitch mechanism. Thus, it is known that many of the pressed steel hitch mechanisms have an outwardly-projecting flange surrounding the socket, which flange extends for all or a large portion of the length of the hitch mechanism. The size and location of the flange is similar for many of the different designs of hitch mechanism. The opening in the front wall can be extended to accommodate all or at least a part of the flange (depending upon the dimensions of the particular hitch mechanism). Accordingly, when the device is fitted at least part of the flange preferably lies within the extensions and the flange and extensions can together limit relative movement between the socket and the housing.

Ideally the housing according to the second aspect also has a top wall to overlie the operating handle. Ideally also the housing according to the second aspect has a bottom wall.

Preferred, desirable and/or optional features identified for the first aspect of the invention can be combined with the second aspect of the invention where they are compatible, and vice versa.

### BRIEF DESCRIPTION OF THE DRAWINGS

The invention will now be described, by way of example, with reference to the accompanying drawings, in which:
- Fig.1: shows a side view of the anti-theft device according to the present invention, fitted to an exemplary hitch mechanism, and with the side wall facing the viewer made transparent for ease of understanding;
- Fig.2: shows a rear view of the anti-theft device and fitted locking bolt;
- Fig.3: shows a view of the back wall of the anti-theft device;
- Fig.4: shows a view of the front wall of the anti-theft device;
- Fig.5: shows a view of the bottom wall of the anti-theft device; and
- Fig.6: shows a side view of a false ball provided for certain embodiments of the anti-theft device.

### DESCRIPTION OF THE EXEMPLARY EMBODIMENTS

The anti-theft device 10 comprises a housing 12 and a locking bolt 14.

The housing 12 is generally in the form of a "box" of cuboid form with a top wall 16, a bottom wall 18, a front wall 20, a back wall 22 and two side walls 24, the walls being rigidly interconnected, in this embodiment by welding together two U-shaped components each of which comprises three substantially flat steel plates. The U-shaped components are secured together at their lines of intersection to create the six-sided housing. In this embodiment one of the U-shaped components comprises the top wall 16 and the two side walls 24 and the other U-shaped component comprises the front wall 20, back wall 22 and bottom wall 18.

In known fashion, each of the side walls 24 has an aligned hole (not seen) to accommodate the locking bolt 14. As shown in Figs. 1 and 2 the locking bolt bridges the gap between the side walls and passes underneath the operating handle 30 whereby to secure the anti-theft device 10 in position upon the hitch mechanism 32.

The locking bolt is of known form, and may for example be as described in UK patent 2 405 443.

The anti-theft device 10 is designed for fitment to a hitch mechanism 32 of substantially standard form. Accordingly, the hitch mechanism has a sleeve 34 which in use is secured to the towing arm 36 of a towed vehicle (not seen) by securing bolts (not seen). The hitch mechanism 32 also has a socket 40 which is of standard dimensions and can accommodate a towing ball (not seen) of standard dimensions. Though not shown in the drawings, a movable securing element lies adjacent to the socket and can engage and secure the towing ball in the socket.

Some of the known designs of hitch mechanism utilise a vertically-aligned securing bolt which passes (vertically) down through a part of the sleeve 34 and though a part of the towing arm 36. Other designs utilise at least one horizontally-aligned securing bolt which passes (horizontally) through a part of the sleeve 34 and through a part of the towing arm 36. Yet other designs utilise both vertically-aligned and horizontally-aligned securing bolts. A securing nut or the like is typically fitted to the end of the securing bolt. In common with many of the known designs, in the fitted condition of Fig.1, the housing 12 covers and obscures at least one of the securing bolts and its securing nut. In addition, the housing 12 is designed to be too small to permit the withdrawal of a securing bolt even if sufficient access can be gained to remove the securing nut. In some embodiments, the locking bolt 14 overlies the head of the (vertically-aligned) securing bolt to prevent the withdrawal of the securing bolt if the securing nut is removed.

The operating handle 30 is shown in its securing position. In common with many of the known anti-theft devices the operating handle cannot be lifted to its releasing position without first removing the anti-theft device 10. It is therefore not possible to insert a towing ball (of standard dimensions) into the socket, nor to secure the towing ball in the socket, whilst the anti-theft device remains in position.

The housing 12 is fitted to the hitch mechanism 32 from the left as viewed in Fig.1, the back wall 22 passing the socket 40 and then passing over and around the operating handle 30, and the front wall 20 passing the socket 40, to reach the fitted position shown in Fig.1. Following insertion and securing of the locking bolt 14, rightwards movement of the housing 12 so as to release the anti-theft device is prevented by engagement of the locking bolt 14 with the operating handle 30, in known fashion.

The back wall 22 has an opening 42 as seen in Fig. 3. It will be understood that the back wall 22 provides support for the top wall 16, the bottom wall 18 and the side walls 24 to which it is connected. Also, the back wall 22 limits the movement of the fitted anti-theft device relative to the hitch mechanism and limits access through which an intending thief can pass a lever or the like in an effort to damage or disable the anti-theft device.

It will be understood that the opening 42 in the back wall 22 is required to accommodate those parts of the hitch mechanism 32 which the back wall passes during fitment. If the anti-theft device was designed to fit to a single design of hitch mechanism the opening 42 could be of a size and shape suited to that particular hitch mechanism. Whilst that would minimise the gaps between the opening and the hitch mechanism when fitted, the inventors have realised that the housing can be made suitable for a large number of the different designs of hitch mechanism and to provide the desired level of security for those different designs. Thus, whilst different designs of hitch mechanism have some different cross-sectional dimensions, those dimensions are sufficiently similar to allow a single design of housing 12 to accommodate many different designs of hitch mechanism without unacceptably reducing the level of security provided.

The horizontal and vertical dimensions of the opening 42 are chosen to accommodate the large number of different designs of hitch mechanisms for which the anti-theft device is to be used (including the protrusions which are present in some of the different designs and which must pass the back wall 22 during fitment). Similarly, the detailed shaping of the opening 42 is designed closely to match the corresponding dimensions of the range of hitch mechanisms. The gap between the hitch mechanism 32 and the back wall 22 of the fitted housing 12 is minimised for the range of hitch mechanisms for which the anti-theft device 10 is to be used.

It will in particular be noted that the top edge 44 of the opening is very close to the top wall 16. This allows the operating handle 30 in its secured position to pass through the opening 42 and to lie close to the top wall inside the housing 12, with no part of the operating handle projecting beyond the top wall. The top wall 16 therefore prevents the (lifting) movement of the operating handle to its releasing position. The top wall 16 is continuous and of maximum rigidity and support to the neighbouring walls.

In this embodiment the socket end of the hitch mechanism 32 projects beyond the front wall 20 in the fitted condition. The front wall 20 therefore has an opening 46 (Fig.4) to accommodate the socket end of the hitch mechanism.

The horizontal and vertical dimensions of the opening 46 are sized to closely match the corresponding dimensions of the socket end of the largest of the hitch mechanisms for which the anti-theft device 10 is to be used and the shaping of the opening 46 closely matches the shaping of the largest hitch mechanism. The gap between the hitch mechanism 32 and the front wall 20 of the fitted housing 12 is therefore minimised for the largest hitch mechanism, and is similarly minimised for all other of the hitch mechanisms for which the anti-theft device 10 is to be used.

In particular, the opening 46 includes two extensions 50 which are sized to accommodate the flanges (not seen) which project from the sides of the different designs of pressed steel hitch mechanisms for which the anti-theft device 10 is to be used. It will thereby be understood that the opening 46 (and the extensions 50) are a sufficiently close fit around the socket end of the hitch mechanism to limit the upwards, downwards and sideways relative movement. Relative movement at the back wall 22 is similarly limited so that the location of the holes in the side walls 24 relative to the hitch mechanism 10 is substantially fixed which facilitates the fitment of the locking bolt 26. In particular, the limited movement which is provided at the front wall 20 and at the back wall 22 provide a relatively fixed location for the locking bolt 14 in between those walls.

In this embodiment the bottom wall 18 has an opening 52 which as seen in Fig.5 is a continuation of the opening 42 in the back wall 22. This opening 52 is provided to accommodate projections of one (or more) of the hitch mechanisms for which the anti-theft device 10 is designed for use. The bottom wall is otherwise continuous so as to maximise the rigidity and support for the neighbouring walls.

In particular, because the socket 40 lies beyond the front wall 20 in the fitted condition, it is not necessary to provide an opening in the bottom wall to underlie the socket. In fact, it is disadvantageous to provide an opening for the socket in any event as it is not intended that the anti-theft device 10 can be fitted to a hitch mechanism which is coupled to an authorised towing vehicle. Accordingly, the socket 40 may be left empty when the anti-theft device is fitted, the fixing of the operating handle 30 in its securing position ensuring that a towing ball of standard dimensions cannot be inserted into the socket.

Nevertheless, if the socket 40 is left open it is possible to insert a smaller ball or other protrusion into the socket and that might permit the unauthorised (albeit unsafe) towing of the vehicle. In order to prevent this potential threat a false ball 56 is inserted into the socket 40 to provide additional security.

The false ball 56 is shown in Fig.6. Importantly, the false ball 56 does not extend beyond the bottom of the socket 40 in use and is thereby significantly smaller than the known false balls used for this purpose. It will be understood that the false ball must be inserted into and secured in the socket 40 before the anti-theft device 10 is fitted (since the operating handle cannot be moved to the releasing position after fitment). Avoiding any extension of the false ball 56 beyond the socket 40 avoids the requirement to increase the size of the opening 46; alternatively stated the size of the opening 46 can be minimised as required only to pass the socket end of the hitch mechanism.

As above indicated, many of the known hitch mechanisms temporarily secure the operating handle in the releasing position, the operating handle moving to its securing positions when the towing ball is inserted into the socket. It is not expected (or desired) that the false ball 56 be inserted directly into the socket 40. Instead, a supporting column 60 is provided to which the false ball may be temporarily secured for insertion into the socket. The supporting column is designed to rest upon the ground or upon another supporting object and to hold the false ball sufficiently far above the ground to permit the user to lower the hitch mechanism onto the false ball similarly to lowering the hitch mechanism onto the towing ball of a towing vehicle. When the false ball has been inserted into and secured in the socket 40 the column is separated from the false ball so that it does not impair the subsequent fitment of the anti-theft device 10.

As above indicated the anti-theft device is designed to be suitable for a range of pressed steel hitch mechanisms, primarily (but not limited to) those manufactured by Knott, Winterhoff and Steelpress. The design shown is, for example, known to be suitable for the Knott pressed steel hitch mechanisms of {i} model K7.5, variants C,D, K and L, {ii} model K14, variants A and B, {iii} model KK14, variants B and C, {iv} model KQ14, variants A and B, and {v} model K20, variants A and B. The design is also known to be suitable for the Winterhoff pressed steel hitch mechanisms of {i} model WW8, variants A, B, C, D, E and G, and {ii} model WW150, variant VF. The design shown is also known to be suitable for the Steelpress pressed steel hitch mechanisms of {i} model ZSK-750, variants A, C, D, L, H and i, {ii} model ZSK-1300, variants C, E, F, K, H and i, {iii} model ZSK-1700, variants B, C, D and E, {iv} model ZSK-2000, variants B and C, {v} model BC-2300, variants B and C, and {vi} model BC-3000.1, variants A, B, C and D. The design may also be suitable for other hitch mechanisms from these manufacturers, and for hitch mechanisms of other manufacturers, which have not yet been tested.

## Claims

1. An anti-theft device (10) for fitment to a hitch mechanism of a towed vehicle, the device comprising a one-piece housing (12) and a locking bolt (14), the one-piece housing being of generally cuboid form with a top wall (16), a bottom wall (18), a front wall (20), a back wall (22) and two side walls (24), the walls being rigidly interconnected, each of the side walls having a hole for the locking bolt, the back wall (22) having an opening (42) of a size and shape to accommodate the hitch mechanism during fitment.

2. The anti-theft device (10) according to claim 1 in which the opening (42) in the back wall (22) is of a size and shape to accommodate a plurality of different hitch mechanisms.

3. The anti-theft device (10) according to claim or claim 2 in which the hitch mechanism has an operating handle (30) with a securing position, and in which housing (12) is designed to enclose some or all of the operating handle (30) in the securing position.

4. The anti-theft device (10) according to claim 3 in which the opening (42) in the back wall is of a size and shape to accommodate the operating handle (30) in the securing position.

5. The anti-theft device (10) according to any one of claims 1-4 in which the opening (42) in the back wall (22) has a top edge (44), and in which the distance between the top edge (44) and the top wall (16) is less than 10 mm.

6. The anti-theft device (10) according to any claim 5 in which the distance between the top edge (44) and the top wall (16) is approximately 7 mm.

7. The anti-theft device (10) according to any one of claims 1-6 in which the bottom wall (18) has an opening (52).

8. The anti-theft device (10) according to claim 7 in which the opening (52) in the bottom wall (18) is contiguous with the opening (42) in the back wall (22).

9. The anti-theft device (10) according to any one of claims 1-8 in which the housing (12) is made as a fabrication having six substantially flat walls (16, 18, 20, 22, 24).

10. The anti-theft device (10) according to claim 9 in which at least some of the walls (16, 18, 20, 22, 24) are integrally formed.

11. The anti-theft device (10) according to any one of claims 1-10 in which at least two of the walls (16, 18, 20, 22, 24) are of different thicknesses.

12. The anti-theft device (10) according to any one of claims 1-11 in which the front wall (20) has an opening (46) which is smaller than the opening (42) in the back wall (22), the opening (46) in the front wall being aligned with the opening (42) in the back wall.

13. The anti-theft device (10) according to claim 12 in which the opening (46) in the front wall (20) has two lateral extensions (50).

14. The anti-theft device (10) according to any one of claims 1-13 including a false ball (56) adapted to locate in, and to be secured in, the socket (40) of the hitch mechanism.

15. The anti-theft device (10) according to claim 14 including a supporting column (60) upon which the false ball (56) is removably mountable.
